Europäisches Patentamt

European Patent Office

Office européen des brevets

(19)

(11) Veröffentlichungsnummer: **0 160 844**

**A1**

(12) # EUROPÄISCHE PATENTANMELDUNG

(21) Anmeldenummer: 85104120.2

(22) Anmeldetag: 04.04.85

(51) Int. Cl.⁴: **B 60 G 17/04**

(30) Priorität: 04.05.84 DE 3416422

(43) Veröffentlichungstag der Anmeldung:
13.11.85 Patentblatt 85/46

(84) Benannte Vertragsstaaten:
DE FR NL SE

(71) Anmelder: ROBERT BOSCH GMBH
Postfach 50
D-7000 Stuttgart 1(DE)

(72) Erfinder: Kopper, Werner
8830 Skylane Drive Brighton
Michigan 48116(US)

(72) Erfinder: Möller, Hubert Dipl.-Ing.
Bergheimer Strasse 37
D-7000 Stuttgart 31(DE)

(72) Erfinder: Schramm, Herbert, Dr.
Im Götzen 25
D-7000 Stuttgart 1(DE)

(72) Erfinder: Wörner, Dieter
Blankenstein-Strasse 5
D-7121 Pleidelsheim(DE)

(54) Lifteinrichtung für die Räder eines Nutzkraftfahrzeugs.

(57) Es wird eine Lifteinrichtung für die Räder eines Nutzkraftfahrzeugs vorgeschlagen. Diese Lifteinrichtung ist an einer Tragachse (4) eines aus Tragachse (4) und Antriebsachse (3) bestehenden Doppelachsaggregats (2) angeordnet. Sie hat einen Liftbalg (17), mit dem die Tragachse (4) angehoben werden kann. Der Druck in dem Liftbalg wird zussammen mit dem Durch in den Federbälgen (7) der Tragachse (4) abhängig von dem durch Sensoren überwachten Radverhalten an der Antriebsachse (3) so gesteuert, daß die Antriebsachse (3) nicht durchdreht, d.h. bei Durchdrehgefahr wird der Lastanteil der Antriebsachse (3) automatisch erhöht.

EP 0 160 844 A1

R. 19306
12.4.1984 He/W1


ROBERT BOSCH GMBH, 7000 Stuttgart 1


Lifteinrichtung für die Räder eines Nutzkraftfahrzeugs

Stand der Technik

Die Erfindung bezieht sich auf eine Lifteinrichtung nach der Gattung des Hauptanspruchs. Eine derartige Lifteinrichtung ist bekannt (DE-PS 30 28 472).

Bei dieser bekannten Lifteinrichtung wird mit Hilfe eines Druckbegrenzungsventils eine Zusatzlast, die das Fahrzeug belastet, von der Antriebsachse übernommen. Die entsprechende Steuerung wird rein lastabhängig durchgeführt.

Durch die DE-OS 27 40 264 ist es ferner bekannt, bei einer Luftfederung für Nutzfahrzeuge mit Antriebsachse und Tragachse eine mechanische Steuerung des Niveauregelventils durch eine geschwindigkeitsabhängige Steuerung zu überlagern. Dies wird erreicht durch eine Ansteuerspannung an einem Druckminderventil, die geschwindigkeitsabhängig variiert wird.

...

Vorteile der Erfindung

Die eingangs genannte Lifteinrichtung mit den kennzeichnenden Merkmalen des Hauptanspruchs hat demgegenüber den
Vorteil, daß sie vollkommen selbsttätig arbeitet. Sobald
die Räder der Antriebsachse beim Anfahren durchdrehen,
sprechen die Radsensoren der Blockierschutzeinrichtung
oder des Antriebsschlupfschutzes an. Die Lifteinrichtung
erhält von der Elektronik ein Signal, und der Luftdruck
in den Federbälgen der Vor- oder Nachlaufachse wird zum
Zwecke der Erhöhung der Last an der Antriebsachse vermindert und/oder der Druck in dem Liftbalg der Lifteinrichtung wird erhöht. Eine Abschaltung erfolgt - ebenfalls selbsttätig -, wenn die Räder der Antriebsachse
nicht mehr durchdrehen.

Dadurch wird ein besserer Kraftschluß zwischen den Rädern
der Antriebsachse und der Straße erreicht.

Ein weiterer Vorteil besteht darin, daß die automatische
Steuerung nur in einem unteren Geschwindigkeitsbereich,
insbesondere also nur beim Anfahren wirksam ist. Auf
diese Weise kann bei höheren Geschwindigkeiten die Seitenstabilisierung der Vor- und Nachlaufachse wieder genützt werden.

Zeichnung

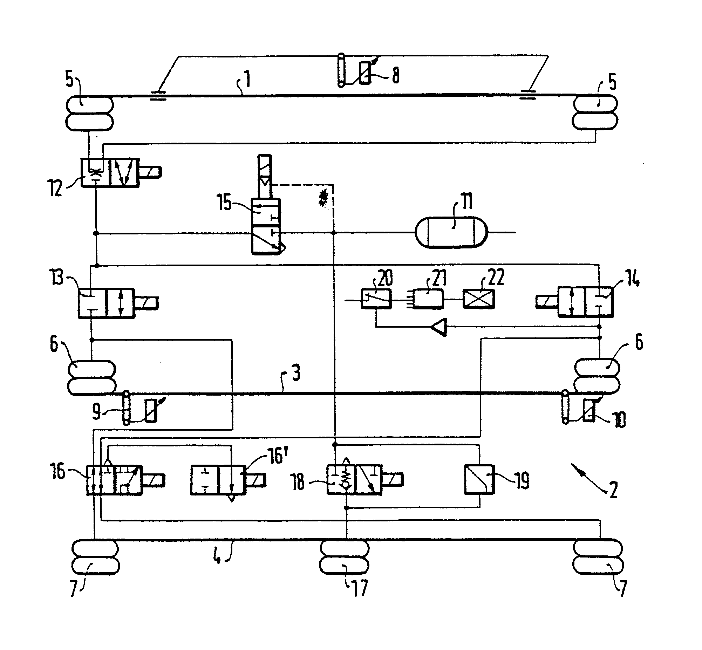

Ein Ausführungsbeispiel der Erfindung ist in der Zeichnung dargestellt und in der nachfolgenden Beschreibung
näher erläutert.

...

Beschreibung des Ausführungsbeispiels

Ein Nutzkraffahrzeug hat drei Achsen, eine Vorderachse
1 und ein Doppelachsaggregat 2. Das Doppelachsaggregat 2
besteht aus einer Antriebsachse 3 und einer Tragachse 4
als Nachlaufachse. Die Achse 4 könnte auch eine Vorlaufachse
sein. Die Vorderachse 1 ist mit zwei Federbälgen 5 abgestützt. Die anderen beiden Achsen 3 und 4 sind ebenfalls
luftgefedert, wobei die Antriebsachse 3 über zwei Federbälge 6 abgestützt ist, während die Tragachse 4 zwei Federbälge 7 hat. Zwischen den Achsen 1 und 3 und dem Fahrzeugaufbau sind drei Wegsensoren 8, 9 und 10 angeordnet, die
bei Abstandsänderung betätigbar sind.

Zur Versorgung der beiden Federbälge 5 der Vorderachse 1
sind diese gemeinsam an ein 2/2-Wege-Magnetventil 12 mit
Quersperre angeschlossen, und den Federbälgen 6 der Antriebsachse 3 ist je ein 2/2-Wege-Magnetventil 13 bzw. 14
zugeordnet. Zu diesen drei Magnetventilen 12, 13, 14 gehört noch ein 3/2-Wege-Magnetventil 15, das als Hauptventil
bezeichnet wird. Die Magnetventile 12, 13, 14 sind abhängig vom Abstand zwischen den Achsen 1 und 2 und dem Fahrzeugaufbau betätigbar. Als Druckquelle dient ein Vorratsbehälter 11, der von einem nicht dargestellten Kompressor
versorgt wird.

Die Überwachung der Federbälge 7 der Tragachse 4 ist zusammengefaßt und wird durchgeführt von einem 5/2-Wege-
Magnetventil 16, das einen Ausgang zur Außenluft hat,
in den noch ein 2/2-Wege-Magnetventil 16' eingeschaltet
ist.

...

Schließlich ist die Tragachse 4 noch mit einem Liftbalg 17 versehen, dem ein 3/2-Wege-Magnetventil 18 und
parallel dazu ein Druckbegrenzer 19 vorgeschaltet sind.

Der Druck in den Federbälgen 6 der Antriebsachse 3
wird überwacht von einem Sensor 20 und einer elektronischen Schalteinrichtung 21, die ihre Signale an das
2/2-Wege-Magnetventil 16' abgeben kann. Diese Schalteinrichtung 21 steht in Verbindung mit einer elektronischen Schalteinrichtung 22 einer Bremsblockierschutzeinrichtung.

Wirkungsweise

Die Signale der Wegsensoren 8, 9 und 10 stellen den Ist-
Wert des Niveaus des Wagenkastens dar und werden in der
elektronischen Schalteinrichtung 21 verarbeitet.

Zum Heben des Wagenkastens werden das Hauptventil 15
und die Magnetventile 12, 13 und 14 umgestellt und
Druckluft aus dem Vorratsbehälter 11 in die Federbälge
5, 6 und 7 strömen lassen. Zum Senken des Wagenkastens
bleibt das Hauptventil 15 in Ruhestellung, und es werden nur die Magnetventile 12, 13 und 14 umgeschaltet,
so daß Luft aus den Federbälgen 5, 6 und 7 über das
Hauptventil 15 zur Außenluft abströmen kann.

Zum Entlasten der Federbälge 7 der Tragachse 4 wird
das 5/2-Wege-Magnetventil 16 umgeschaltet, und es wird
im Zusammenspiel mit dem 2/2-Wege-Magnetventil 16'
Luft zur Außenluft abströmen lassen. Parallel dazu
kann auch das 3/2-Wege-Magnetventil 18 betätigt wer-

...

den, so daß der Liftbalg 17 Druck erhält. Zum Anheben der Tragachse 4 werden die Federbälge 7 gänzlich
entlüftet und der Liftbalg 17 voll belüftet.

Nun kann aber auch in die elektronische Schalteinrichtung 21 ein Sollwert eingegeben werden, der einem bestimmten Druckverhältnis zwischen dem Druck in den Federbälgen 6
der Antriebsachse 3 und den Federbälgen 7 der Tragachse 4
entspricht. Dies ist vorteilhaft, um die Lastverteilung so
zu verändern, daß die Antriebsachse einen größeren Lastanteil übernimmt als die Tragachse.

Eine solche Sollwerteingabe hat aber den Nachteil, daß
sie nicht oder doch zumindest nicht optimal einstellbar
ist. Insbesondere ist sie nicht einem Radschlupf bzw.
einem Antriebsschlupf der Antriebsachse selbsttätig
anpaßbar und nachregelbar.

Dies wird gemäß der Erfindung durch eine Verknüpfung von
Signalen der elektronischen Schalteinrichtungen 21 und
22 erreicht. Dann können den Rad-Drehzahlsensoren der
Blockierschutz- und/oder der Antriebsschlupfschutz-Einrichtung Signale entnommen werden, die es gestatten, den
Lastanteil der Antriebsachse der jeweiligen Fahrbahnbeschaffenheit anzupassen. Wenn dann also die Räder der
Antriebsachse 3 einen Schlupf haben, wird durch Ablassen
von Druck aus den Federbälgen 7 und/oder durch Druckanstieg
im Liftbalg 17 der Lastanteil der Antriebsachse 3 so lange
erhöht, bis die Durchdrehgefahr der Räder der Antriebsachse
3 gebannt ist.

Da ein solches Durchdrehen bei höheren Fahrgeschwindigkeiten nicht eintritt, wird die Einrichtung bei Geschwindigkeiten von z.B. über 10 Std/km abgeschaltet.

0160844

R. 19306
12.4.1984 He/Wl

ROBERT BOSCH GMBH, 7000 Stuttgart 1

Ansprüche

1. Lifteinrichtung für die Räder eines Nutzkraftfahrzeugs mit einer Antriebsachse und mit einem Liftventil, das den Druck in den Federbälgen einer Vor- oder Nachlaufachse zum Zwecke des Entlastens der Räder und ihres Anhebens vermindert oder abbaut, dadurch gekennzeichnet, daß bei Anwendung der Lifteinrichtung (Liftbalg 17) bei einem Fahrzeug mit einer Blockierschutzeinrichtung und/oder Antriebsschlupfschutzeinrichtung eine selbsttätige Schalteinrichtung (21, 22) verwendet ist, mit der beim Durchdrehen der Räder der Antriebsachse (3) der Druck in den Federbälgen (7) der Tragachse (4) automatisch verminderbar und/oder der Druck in der Lifteinrichtung (Liftbalg 17) automatisch verstärkbar ist.

2. Lifteinrichtung nach Anspruch 1, dadurch gekennzeichnet, daß die selbsttätige Schalteinrichtung (21, 22) nur im Anfahr-Geschwindigkeitsbereich ansteuerbar ist.

0160844

**0160844**
Nummer der Anmeldung

Europäisches
Patentamt

**EUROPÄISCHER RECHERCHENBERICHT**

EP 85 10 4120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| | | | B 60 G 17/04 |
| X | DE-A-2 648 081 (ASPRO)<br>* Seite 14, Zeilen 1-27; Figur 1 * | 1 | |
| | --- | | |
| X | US-A-3 920 283 (STRADER)<br>* Spalte 6, Zeilen 18-35; Figuren 4,5a * | 1 | |
| | --- | | |
| A | GB-A-2 016 390<br>(KLÖCKNER-HUMBOLDT-DEUTZ) | | |
| | --- | | |
| D,A | DE-A-2 740 264 (DAIMLER-BENZ) | | |
| | --- | | |
| D,A | DE-A-3 028 472 (DAIMLER-BENZ) | | |
| | ----- | | RECHERCHIERTE SACHGEBIETE (Int. Cl.4) |
| | | | B 60 G 17/00 |

Der vorliegende Recherchenbericht wurde für alle Patentansprüche erstellt

| Recherchenort<br>BERLIN | Abschlußdatum der Recherche<br>28-06-1985 | Prüfer<br>KRIEGER P O |
|---|---|---|